# EUROPEAN PATENT APPLICATION

(11) **EP 0 578 459 A1**
(43) Date of publication of application: **12.01.1994**
(21) Application number: 93305237.5
(22) Date of filing: 01.07.1993
(51) Int. Cl.: H02G 3/06

(54) **Improvements relating to support systems for cables, service pipes and the like**

(30) Priority: 04.07.1992 GB 9214258
(71) Applicant: SWIFTS OF SCARBOROUGH LIMITED, Eastfield Scarborough YO11 3BY (GB)
(72) Inventor: Spencer, Graham c/o Swifts of Scarborough Ltd., Eastfield Scarborough YO11 3BY (GB)
(74) Representative: Denmark, James

(57) **Abstract**

A cable-tray or cable-ladder coupler which is adjustable as to the angle between the respective coupling edges is provided. The coupler is erected from a blank and two sections of it are relatively hingeable and may be locked in position. The hinge is constituted by a single strip of material and two overlapping pieces of sheet material are relatively slidable by means of a bolt guided in an arcuate slot.

## Description

This invention relates to support systems for cables, service pipes and the like and in particular concerns what is known as an accessory or coupler for cable trays and cable ladders.

Cable support systems typically comprise what are known as cable trays and cable ladders, being elongated members defining a channel space for the receipt of the cables, the channel space being defined in the case of a cable tray by a base and cable tray sides, and in the case of cable ladder by ladder rungs extending between parallel ladder stringers.

When it is necessary to couple one end of one length of cable tray or ladder with an end of another cable tray or cable ladder, unless the cable trays and cable ladders are in alignment and can be joined directly end to end, it is necessary to use an accessory or coupler designed with a pair of coupling edges adapted respectively to couple to the respective ends of the cable trays and cable ladders. Accessories may be of T-configuration or cross configuration for the joining together of three lengths of cable tray or ladder or four lengths of cable tray ladder arranged at right angles to each other as the case may be.

It frequently happens however that in any particular installation, the lengths of cable tray or ladder will lie at an angle other than 90°, and it is usual in such circumstances to make a custom designed accessory or coupler with the coupling edges at the appropriate angle. As these accessories or couplers are fabricated from sheet metal in the majority of cases, so the custom manufacture of accessories and couplers can become an inconvenience and an expense.

Additionally, if it is discovered on site that a coupler is not of the correct angle for the installation in question, then this can cause considerable delays in the erection of the system.

The present invention seeks to provide a novel form of accessory or coupler which is adjustable as to the angle between the respective coupling edges so that it can be used for any of a range of applications involving cable trays and cable ladders which are arranged at different angles.

According to one aspect of the present invention, there is provided a device made of sheet material for connecting together the ends of two lengths of cable tray or cable ladder, comprising two or more sections which are channel shaped and of which the bases serve to support cables or the like, extending in use between the cable tray lengths, and of which sections two define edges respectively for coupling to the said cable trays or ladders, the sheet material of the device integrally connecting adjacent sections so that the sections are adjustable in relative angularly by bending said sheet material where it so connects the sections.

Preferably, the coupler or accessory includes means for locking the sections in any adjusted position.

Adjacent sections may be angularly adjustable about a perpendicular axis, for coupling lengths of cable tray or cable ladder in a common plane. The respective bases of adjacent sections then preferably overlap.

Alternatively, adjacent sections may be angularly adjustable about a transverse axis, for coupling lengths of cable tray or cable ladder inclined at different gradients. The fixing means may comprise a nut and bolt arrangement adapted to pass through the overlapping sections, one of which has a hole for the bolt and the other of which has a slot through which the bolt can slide when adjustment is taking place, said slot being arcuate and having its centre at location about which the sections are hingeable.

In a particularly suitable arrangement, a single strip of material defines the hinge point and also the walls of both sections at that side of the accessory, the material being of a ductile nature so as to be capable of defining a hinge.

In one embodiment, the entire accessory is formed from a blank of sheet material duly punched and cut from such material, the blank defining in each of said sections a base and outer and inner walls, which are folded at right angles relative to the base, and the outer walls are integral and are coupled by a section which forms the said hinge pivot.

Typically the blank will be of metal, and the respective inner walls will be provided with means whereby they can be coupled and anchored together when the blank is folded to define the accessory, and the sections have been angled one relative to another to suit the particular cable tray installation.

The edges for connection to the cable tray lengths or cable ladder lengths may be defined by base extensions which are joggled out of the plane of the base, so that the base will lie in the same plane as the adjacent cable tray, and the sides may be provided with coupling tongues adapted to overlap the side walls of the cable tray to which the edge is to be connected.

The tongues may be profiled as set forth in our co-pending UK Patent Application No 9121518.6 for ease of insertion of the tongues into the return flange cable tray walls when the cable tray is of the return flange type.

The invention is best explained in relation to embodiments thereof, illustrated in the accompanying drawings, wherein:-
Fig. 1 is a plan view of a sheet metal blank erectable into an accessory according to an embodiment of the invention;
Fig. 2 shows the blank of Fig. 1 in erected condition and arranged to receive the ends of respective cable tray lengths;
Fig. 3 shows an erected accessory according to a further embodiment of the invention;
Fig. 4 is a plan view of the sheet metal blank erectable into the accessary of Fig. 3;
Fig. 5 is a plan view of a sheet metal blank erectable into a vertical riser according to yet a further embodiment of the invention;
Fig. 6 shows the blank of Fig. 5 in erected condition; and
Fig. 7 is a plan view of a cable riser blank according to another embodiment of the invention.

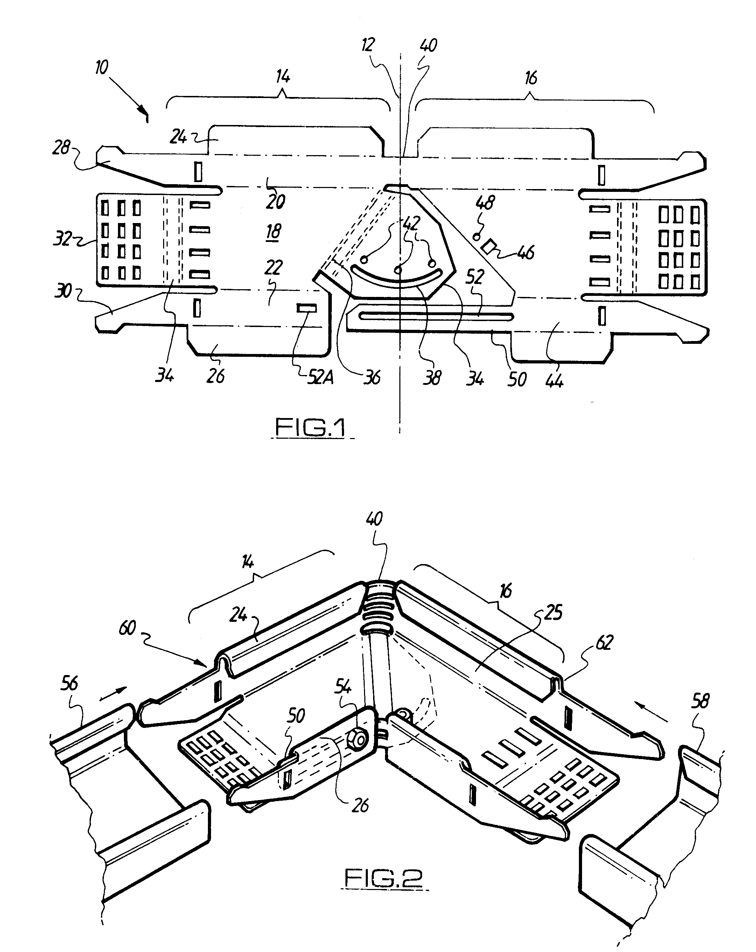

Referring to the drawings, and firstly to Fig. 1, the blank 10 is of sheet metal such as mild steel, and may if desired be dip galvanised. The blank can be considered as having a centre line 12 insofar as it defines two sections 14 and 16 to opposite sides of the centre line 12, although the sections are not symmetrical as will be evident.

Section 14 has a base 18 and an outer side wall 20 and an inner side wall 22, the expressions inner and outer being applied in relation to the manner in which the accessory is used as will be clear hereinafter.

Each of the side walls 20 and 22 is provided with a fold over top flange 24 and 26, and at the left hand ends in Fig. 1, the side walls 20 and 22 are provided with identical location and connection tongues 28 and 30.

The base at the left hand end has a joggled extension plate 32 which is displaced out of the plane of the base 18 by a joggling section 34 which is formed when the blank is cut and punched from the stock material.

At the right hand end and towards the centre line 12, the base 18 is provided with a coupling plate 34, of a configuration shown and again joggled downwardly out of the plane of the base 18 by the joggled section 36. The coupling plate 34 is provided with a curved slot 38 whose centre of curvature is on the centre line, and in the vicinity of the section 40 which couples the outer walls of the sections 14 and 16.

Adjacent the slot 38 are additional fixing apertures 42.

As can be seen from Fig. 1, the section 16 is of generally similar configuration to the section 14, except that the connector plate 34 is omitted, and the inner side wall 44 is provided with fixing slot 46 and aperture 48. The slot 46 is arranged on the same radius of curvature as the slot 38 and the aperture 48 is arranged on the same radius of curvature as the apertures 42 so that as will be explained hereinafter when the blank is assembled, slot 38 registers with slot 46 and apertures 42 can be arranged to register with aperture 48.

As will be appreciated from the foregoing description, the blank is folded to an erected condition in order to render it suitable for forming the accessory which is shown in Fig. 2, and in the arrangement shown in Fig. 1 the fold lines are indicated by chain-dotted lines. The double dotted lines illustrate the joggled portions.

The blank is furthermore punched with apertures as indicated.

The side wall 44 is furthermore provided with a long extension tongue 50 having a slot 52 therein. Additionally, the side wall 22 of section 14 is provided with the registration slot 52 which registers with the slot 50 in the assembled condition of the accessory.

In order to assemble the accessory, the side walls of the sections are folded upwardly, and the flanges such as 24 and 26 of the side walls are folded inwardly as shown in Fig. 2.

To angle the respective sections 14 and 16 they are hinged about the section 40 so that the coupling plate 38 slides underneath the base of the section 16, and the slots and apertures 38, 46 and 42, 48 register so that a bolt can be passed through the slots 38 and 46 to anchor the sections in the angled position. The long tongue 50 is positioned to the inside of side 22 but between the side 22 and the flange 26 as shown in Fig. 2, and then a bolt 54 is passed through the aligned slots 52 and 52A to anchor the tongue 50 in the adjusted position. The tongue has to be bent so as to follow the angularity between the sections 14 and 16, as will be understood.

Fig. 2 shows the accessory in the assembled condition, and a pair of return flange cable tray ends 56 and 58 adapted to be presented to and coupled to the coupling edges 60 and 62 defined at the free ends of the sections 14 and 16.

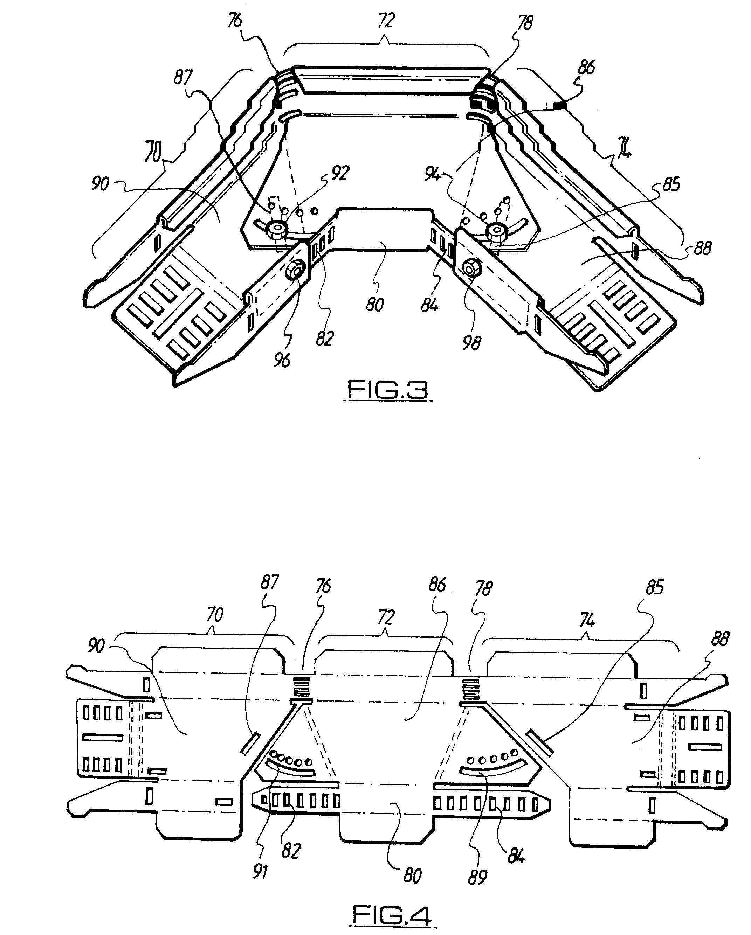

Fig. 3 shows a further embodiment of the invention, in this case the accessory having three defined sections; tray connecting sections 70 and 74, and intermediate section 72. This three-section connector is similarly produced by erection from a single blank, and the end sections 70 and 74 have similar forms to that of section 14 in the two-section accessory, except that the connector plate 34 is omitted, and fixing slots 85 and 87 are provided in base plates 88 and 90 respectively.

Middle section 72 comprises a base plate 86, connector plates 81 and 83 which overlap the base plates 88 and 90 of the end sections 70 and 74, and side wall 80 from which extension tongues 82 and 84 extend at either side.

The end sections 88 and 90 are angularly adjustable relative to one another by deformation of the coupling portions 76 and 78 and extension tongues 82 and 84 respectively. The accessory is then locked in shape by the fitting of bolts 92 and 94 through slots 85 and 89, and 87 and 91 respectively in the overlapping base plates, and bolts 96 and 98 into the side walls and through the extension tongues. This embodiment has an advantage over the one-hinge embodiment in that considerably lens deformation occurs at each hinge, thus making the structure more durable. The embodiment shown in Fig. 3 also displays a greater range of angular positions possible and also provides a less edged connection, thus facilitating the positioning of cables within.

An extremely effective and efficient coupling accessory is provided by the invention and is one which can be readily adjusted in an angular fashion to suit the angle of coupling between the trays 56 and 58 regardless of the angle at which the trays lie, as long as this angle is within the range of adjustment of the accessory.

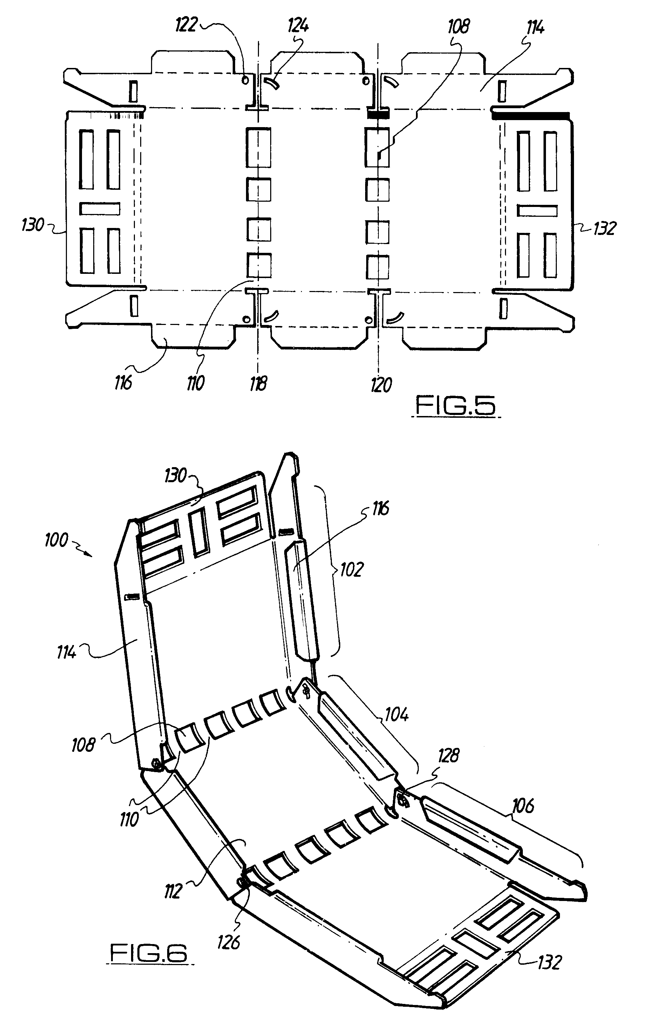

A similar type of strip-hinge arrangement might also be used in an accessory used to alter the gradient of cable tray or ladder arrangement, as shown in Figs. 5 and 6. The vertical riser 100 shown in Fig. 6 is divided into three sections 102, 104, 106 by a transverse arrangement of rectangular holes 108, defining hinge strips 110. In the case of a vertical riser 100, the hinge strips 110 are positioned in the floor 112 of the accessory 100, as opposed to the previously described embodiments which provide lateral angular displacement in a plane, wherein the hinge strips are provided in the side-wall portions, e.g. side wall 25 of the embodiment shown in Fig. 2

In manufacture, the factory process will, after blanking to the form shown in Fig. 5, include the steps of bending the side walls 114 to an upright position and inturning the wall flanges 116. In use, the user simply bends the riser 100 into the multi-incline form desired. Only the strips 110 along the two transverse hinges 118 and 120 are deformed, and the upper corners of the separate side walls 114 are caused to overlap. To fix the arrangement in shape, the user attaches nuts 126 and bolts 128 in the respective holes 122 and arcuate slots 124 provided in the overlapping side walls 114. The riser ends 130 and 132 are adapted for connection to the ends of a cable ladder or tray.

The use of arcuate slots in the fixing arrangement allows the angular displacement of the riser to be variable through a range of angles. It will be appreciated that any number of hinges, e.g. 118, from only one upwards, can be provided and any suitable fixing means might be used. If the connecting strips 110 are sufficiently rigid or numerous, no separate fixing means may be required.

Further, a conversely-curved riser arrangement could be provided with suitable fixing means, e.g. side wall-like portions which are bent vertically downwards. These portions will overlap on bending the riser into shape, and will be provided with slots and holes in a similar fashion to those in the convavely-curved riser 100 side walls 114 to allow fixing into shape by the placement of bolts therein.

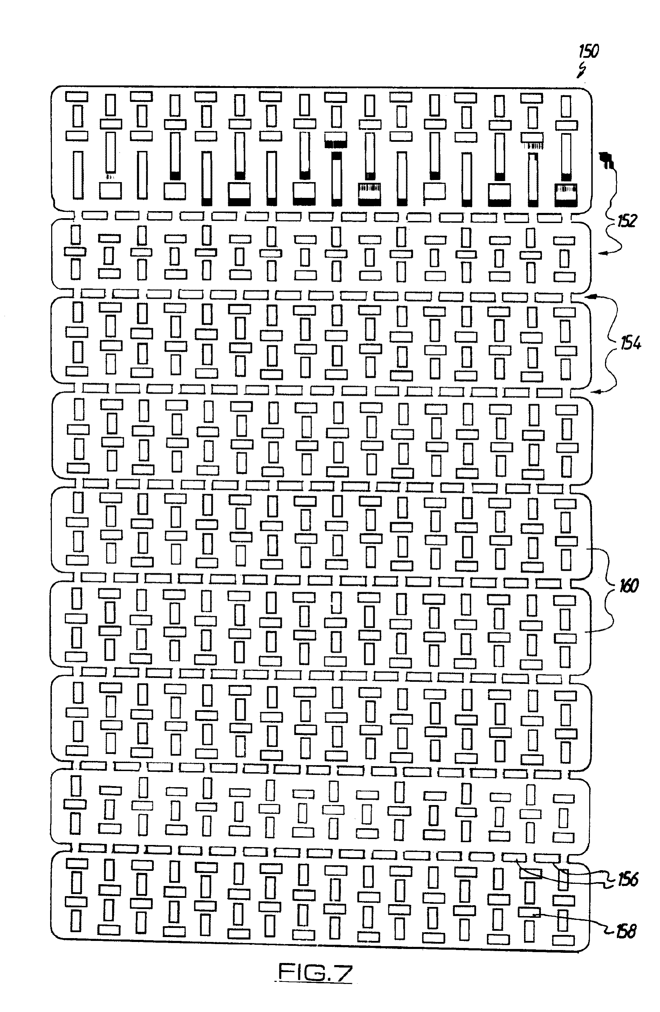

In a further embodiment of cable riser according to the invention, a configuration of blank as shown in Fig. 7 is used. This cable riser blank 150 has nine riser sections 152, separated by eight lines of weakness 154. Each line of weakness 154 is defined by a row of slots 156 cut into the blank. The remainder of the perforations 158 on the blank are more widely spaced, so that the device will bend along the designated lines 154 when torque is applied.

The peripheral sections 160 are erected by machine labour at the manufacturing site to form side walls. It is however preferred that the predesignated hinge lines 154 are weak enough for the riser to be further formed manually at the site of installation.

## Claims

1. A device made of sheet material for connecting together the ends of two lengths of cable tray or cable ladder, comprising two or more sections which are channel shaped and of which the bases serve to support cables or the like extending in use between the cable tray lengths, and of which sections two define edges respectively for coupling to the said cable trays or ladders, the sheet material of the device integrally connecting adjacent sections so that the sections are adjustable in relative angularly by bending said sheet material where it so connects the sections.

2. A device according to claim 1 wherein adjacent sections are angularly adjustable about a perpendicular axis, for coupling lengths of cable tray or cable ladder in a common plane.

3. A device according to Claim 1 wherein adjacent sections are angularly adjustable about a transverse axis for coupling lengths of cable tray or cable ladder inclined at different gradients.

4. A device according to claim 1, 2 or 3, including means for locking the sections in any adjusted position.

5. A device according to claim 4, the fixing means comprising one or more nut and bolt arrangements adapted to pass through each pair of overlapping sections, one of which having a hole for the bolt and the other having a slot through which the bolt can slide when adjustment is taking place, said slot being arcuate and having its centre of curvature at location about which the sections are hingeable.

6. A device according to any of claims 1 to 5, wherein a line of weakness built into the device defines each hinge, the material of the device at each hinge being of a deformable nature.

7. A device according to Claim 6, wherein the lines of weakness are created in the material by the positioning of slots along the said lines.

8. A device according to any of claims 1 to 7, wherein the entire device is formed from a blank of sheet material duly punched and cut from such material, the blank defining in each of said sections a base and outer and inner walls, which are folded at right angles relative to the base, and the outer walls are integral.

9. A device according to any of claims 1, 2, 4, 5 or 6, wherein the respective inner walls are provided with means whereby they can be coupled and anchored together when the blank is folded to define the device, and the sections have been angled one relative the other to suit the particular cable tray or cable ladder installation.

10. A device according to any of claims 1 to 8, wherein the edges for connection to the cable-tray or cable-ladder lengths may be defined by base extensions which are joggled out of the plane of the base, so that the base will lie in the same plane as the adjacent cable tray or cable ladder, and the sides are provided with coupling tongues adapted to overlap the side walls of the cable tray or cable ladder to which the edge is to be connected.

11. A device according to claim 10, wherein the tongues are suitably profiled for ease of insertion into cable-tray or cable-ladder walls of the return flange type.

12. A device according to any of claims 1 to 11, wherein the blank is of metal.
